# EUROPÄISCHE PATENTSCHRIFT

(11) **EP 2 691 855 B1**
(45) Veröffentlichungstag und Bekanntmachung des Hinweises auf die Patenterteilung: **21.02.2018**
(21) Anmeldenummer: 12714220.6
(22) Anmeldetag: 29.03.2012
(51) Int. Cl.: G06F 9/445

(54) **VERFAHREN ZUM AKTUALISIEREN EINES DATENTRÄGERS**
METHOD FOR UPDATING A DATA STORAGE MEDIUM
PROCÉDÉ D'ACTUALISATION D'UN SUPPORT DE DONNÉES

(30) Priorität: 31.03.2011 DE 102011015710
(43) Veröffentlichungstag der Anmeldung: 05.02.2014
(73) Patentinhaber: Giesecke+Devrient Mobile Security GmbH, 81677 München (DE)
(72) Erfinder: SUMMERER, Alexander, 85586 Poing (DE)
(86) Internationale Anmeldenummer: PCT/EP2012/001397
(87) Internationale Veröffentlichungsnummer: WO 2012/130460

(56) Entgegenhaltungen:
- EP-A1- 1 361 527
- WILLIAM G SIRETT ET AL: "Design, Installation and Execution of a Security Agent for Mobile Stations", 1. Januar 2006 (2006-01-01), SMART CARD RESEARCH AND ADVANCED APPLICATIONS LECTURE NOTES IN COMPUTER SCIENCE;;LNCS, SPRINGER, BERLIN, DE, PAGE(S) 1 - 15, XP019029951, ISBN: 978-3-540-33311-1 das ganze Dokument

## Beschreibung

Die Erfindung betrifft ein Verfahren zum Aktualisieren eines Datenträgers im Hinblick auf eine in dem Datenträger ausführbare Datenträgerapplikation, wobei der Datenträger in einem Telekommunikationsendgerät eingesetzt ist, einen entsprechend eingerichteten Datenträger und ein entsprechend eingerichtetes Telekommunikationsendgerät.

Inzwischen sind Telekommunikationsendgeräte, die mit leistungsfähigen Prozessoren und vielerlei Applikationen ausgestattet sind - so genannte Smartphones - sehr populär. Die hierfür benötigte Telekommunikations- bzw. Mobilfunkverbindung und/oder der für die vielfachen, häufig auch vertrauliche Daten verarbeitenden Anwendungen benötigte abgesicherte Speicherplatz wird von sicheren Datenträgern bereitgestellt, die in das jeweilige Telekommunikationsendgerät einsetzbar sind, z.B. von (U)SIM-Mobilfunkkarten, Smartcards, sicheren digitalen (SD) Speicherkarten oder dergleichen. Solche sicheren Datenträger umfassen in der Regel auch einen Prozessor und darauf ausführbare Applikationen. Es lassen sich hierbei zwei verschiedene Arten von Applikationen unterscheiden, nämlich die auf dem Telekommunikationsendgerät installierten Endgeräteapplikationen - bei einigen Smartphones auch als "Apps" bezeichnet -, und die auf dem Datenträger ausführbaren Datenträgerapplikationen - bei einigen Datenträgern auch als "Applets" bezeichnet.

Während mit den Endgeräteapplikationen (z.B. Apps) vielfältige Anwendungen auf dem Telekommunikationsendgerät bereitgestellt werden, betreffen die Datenträgerapplikationen (z.B. Applets) häufig Anwendungen im Zusammenhang mit Sicherheitsaspekten des Telekommunikationsendgeräts, z.B. die Telekommunikations- oder Mobilfunkverbindung, die Identität eines Nutzers, geldwerte Transaktionen oder sonstige vertrauliche oder schützenswerte Daten. Die Datenträger verfügen insofern über besondere Sicherheitsfunktionalitäten, insbesondere über einen abgesicherten Speicher. Auf dem Telekommunikationsendgerät ausgeführte Endgeräteapplikationen benötigen häufig Zugriff auf Datenträgerapplikationen in dem sicheren Datenträger. Um einen Missbrauch der sicherheitsrelevanten Funktionalitäten der Datenträgerapplikationen und der dort gespeicherten vertraulichen Daten zu verhindern, kann z.B. eine Zugriffsrechteverwaltung vorgesehen sein, die den Zugriff einer Endgeräteapplikation auf eine Datenträgerapplikation nur bei entsprechenden Zugriffsrechten erlaubt. Ein solcher Mechanismus betrifft jedoch nur die Zugriffsrechte solcher Endgeräteapplikationen, die bereits bei der Herstellung des Datenträgers, z.B. bei dessen Initialisierung oder Personalisierung, bekannt waren und berücksichtigt werden konnten. Endgeräteapplikationen, die nachträglich auf einem Telekommunikationsendgerät installiert werden, sind der Zugriffsrechteverwaltung deshalb nicht bekannt und haben demzufolge auch keinen Zugriff auf installierte Datenträgerapplikationen. Noch viel weniger ist ein Zugriff auf solche Datenträgerapplikationen möglich, die erst noch auf dem Datenträger installiert werden müssten. Die nachträgliche Aktualisierung von Zugriffsrechten oder gar die nachträgliche Installation neuer Datenträgerapplikationen auf einem bereits ausgelieferten Datenträger ist hierbei insbesondere aus Sicherheitsgründen nicht gewünscht bzw. gar nicht möglich.

Da Telekommunikationsendgeräte üblicherweise nur über einen einzigen Datenträgersteckplatz verfügen, können geänderte Zugriffsrechte oder neue Datenträgerapplikationen auch nicht auf einem zweiten sicheren Datenträger bereitgestellt werden. Die Bereitstellung eines vom Anbieter entsprechend aktualisierten Austausch-Datenträgers ist zwar denkbar aber nicht besonders vorteilhaft, da dann wichtige und gar nicht oder nur schwer wieder beschaffbare Nutzerdaten verloren wären, z.B. digitale Zertifikate, Lizenzen oder Rechte.

In diesem Zusammenhang schlägt die EP 1361527 A1 vor, den Datenbestand einer ausgelieferten Mobilfunkkarte mittels einer kontaktlosen Datenkommunikation über eine Luft- oder OTA-Schnittstelle ("over-the-air") zu aktualisieren. Andere in Telekommunikationsendgeräte einsetzbare Datenträger, z.B. SD-Karten oder dergleichen, stellen die hierfür benötigte technische Infrastruktur jedoch häufig nicht bereit. Darüber hinaus würden Nutzer eines sicheren Datenträgers mit vertraulichen Nutzerdaten in ihrem Vertrauen auf die Datensicherheit erschüttert, da kontaktlose Datenübertragungen häufig und berechtigterweise Befürchtungen hinsichtlich Datensicherheit und Datenmissbrauch auslösen.

Um einem externen Gerät, z.B. einem Telekommunikationsgerät, einen programmierenden Zugriff auf einen Datenträger zu ermöglichen, ist es üblich, dass in dem Gerät eine Programmierschnittstelle des Datenträgers installiert wird, in der z.B. Anforderungen des Datenträgers an Datenformate und dergleichen, die bei der Programmierung von Daten in den Datenträger berücksichtigt werden müssen, deklariert sind. Eine solche Programmierschnittstelle kann beispielsweise als Betriebssystem-Ergänzung oder -Erweiterung eines zur Steuerung des Geräts in dem Gerät installierten Betriebssystems implementiert sein. Mittels der Programmierschnittstelle des Datenträgers ist das Gerät in der Lage, Daten in den Datenträger zu programmieren, ohne selbst Details über für den Datenträger benötigte Datenformate kennen zu müssen. Eine solche Programmierschnittstelle wird häufig als Application Programming Interface (API) bezeichnet.

In einem unveröffentlichten firmeninternen Stand der Technik der Anmelderin, der in einer am selben Tag wie die vorliegende Patentanmeldung eingereichten Patentanmeldung beschrieben ist, ist ein Verfahren zum Aktualisieren eines Datenträgers, der in ein Telekommunikationsendgerät eingesetzt ist, im Hinblick auf in das Telekommunikationsendgerät neu zu installierenden Endgeräteapplikationen ("App") angegeben. Zur Aktualisierung des Datenträgers werden Konfigurationsdaten verwendet, mit welchen Zugriffsrechte der neuen Endgeräteapplikation ("App") auf im Datenträger installierte Datenträgerapplikationen ("Applets") aktualisiert werden. Optional wird bei der Aktualisierung des Datenträgers zudem eine neue Datenträgerapplikation ("Applet") in den Datenträger geladen, deren Funktionalitäten die neue Endgeräteapplikation benötigt. Eine Aktualisierung von Zugriffsrechten mittels Konfigurationsdaten ist hierbei häufig ebenfalls erforderlich. Bei dem Verfahren werden die Konfigurationsdaten, und optional die Datenträgerapplikation, zusammen mit der neu zu installierenden Endgeräteapplikation zunächst in das Telekommunikationsendgerät geladen. Die Endgeräteapplikation wird im Telekommunikationsendgerät installiert. Die Konfigurationsdaten werden an eine in dem Datenträger installierte Sicherheitsapplikation weitergeleitet. Die Sicherheitsapplikation wird mit den Konfigurationsdaten aktualisiert.

Eine bei der Sicherheitsapplikation bereitstehende Datenträgerapplikation kann nicht unmittelbar durch die Sicherheitsapplikation in dem Datenträger installiert werden. Denn die Sicherheitsapplikation ist zur Verwaltung von Zugriffsrechten zwischen Endgeräteapplikationen und Datenträgerapplikationen eingerichtet und kann zwar Konfigurationsdaten empfangen und innerhalb der Sicherheitsapplikation implementierte Zugriffsrechte mittels der Konfigurationsdaten aktualisieren. Die Sicherheitsapplikation ist dagegen nicht dazu eingerichtet und nicht in der Lage, ohne weitere Maßnahmen eine Installation von Datenträgerapplikationen außerhalb der Sicherheitsapplikation durchzuführen. Eine Installation von Datenträgerapplikationen kann ausschließlich durch eine Datenträgerverwaltung des Datenträgers durchgeführt werden. Eine direkte Kommunikation zwischen der Sicherheitsapplikation und der Datenträgerverwaltung ist nicht möglich.
Ein direktes Laden von Datenträgerapplikationen in den Datenträger unter Umgehung der Sicherheitsapplikation, z.B. direkt mittels der Datenträgerverwaltung, zu erlauben ist nachteilig, da die Gefahr besteht, dass Software aus unbekannter Quelle ungeprüft in den Datenträger gelangt. Hierbei kann auch schädliche Software in den Datenträger gelangen. Das Dokument WILLIAM G SIRETT ET AL: "Design, Installation and Execution of a Security Agent for Mobile Stations", 1. Januar 2006 (2006-01-01), SMART CARD RESEARCH AND ADVANCED APPLICATIONS LECTURE NOTES IN COMPUTER SCIENCE;LNCS, SPRINGER, BERLIN, DE, PAGE(S) 1 - 15, XP019029951,ISBN: 978-3-540-33311-1 offenbart ein Verfahren plus Protokoll zur Etablierung eines Sicherheitskontexts zwischen dem Server eines Netzwerkbetreibers und einer SIM-Karte, die in ein nicht-vertrauenswürdiges Mobiltelefon eingesetzt ist, mit dem Ziel, einen vertraulichen Datenaustausch zwischen dem Server und der SIM-Karte zu ermöglichen. Der Zugriff auf die SIM-Karte erfolgt über eine Programmierschnittstelle. Aktualisierungsdaten werden vom Netzwerkbetreibers empfangen.

Der Erfindung liegt die Aufgabe zu Grunde, ein sicheres und vielseitig einsetzbares Verfahren zum Aktualisieren eines Datenträgers im Hinblick auf eine in dem Datenträger ausführbare Datenträgerapplikation zu schaffen, insbesondere ein Verfahren, das es ermöglicht, außerhalb einer Sicherheitsapplikation des Datenträgers zu installierende Aktualisierungsdaten wie beispielsweise Datenträgerapplikationen auf sichere Weise in dem Datenträger zu installieren.

Die Aufgabe wird gelöst durch ein Verfahren nach Anspruch 1. Vorteilhafte Ausgestaltungen der Erfindung sind in den abhängigen Ansprüchen angegeben.

In den Datenträger zu ladende Aktualisierungsdaten werden auf sichere Weise stets unter Einschaltung der Sicherheitsapplikation in den Datenträger geladen und unterliegen somit den Kontrollmechanismen der Sicherheitsapplikation. Für zumindest einen Teil der Aktualisierungsdaten wird die Möglichkeit bereitgestellt, die Aktualisierungsdaten aus der Sicherheitsapplikation an die Programmierschnittstelle und von dort an die Datenträgerverwaltung zu übermitteln. Die Programmierschnittstelle wird somit als Proxy-Server zwischen der Sicherheitsapplikation und der Datenträgerverwaltung verwendet, und ermöglicht als solcher eine Kommunikation zwischen den beiden räumlich innerhalb des Datenträgers vorgesehenen, aber kommunikationstechnisch voneinander getrennten Instanzen Sicherheitsapplikation und Datenträgerverwaltung. Hierdurch können auf sichere Weise auch Aktualisierungsdaten berücksichtigt werden, die außerhalb der Sicherheitsapplikation zu installieren sind.

Daher ist gemäß Anspruch 1 ein sicheres und vielseitig einsetzbares Verfahren zum Aktualisieren eines Datenträgers im Hinblick auf eine in dem Datenträger ausführbare Datenträgerapplikation geschaffen.

Insbesondere Aktualisierungsdaten, die außerhalb der Sicherheitsapplikation zu installieren sind, wie z.B. neu in den Datenträger einzufügende Datenträgerapplikationen, können mit dem erfindungsgemäßen Verfahren über die als Proxy-Server genutzte Programmierschnittstelle sicher in den Datenträger eingebracht und dort installiert werden.

Die Aktualisierungsdaten werden vorzugsweise durch das Telekommunikationsendgerät an den Datenträger bereitgestellt, insbesondere durch die Programmierschnittstelle. Die Programmierschnittstelle ist im Telekommunikationsendgerät installiert, ist dem Datenträger zugeordnet und ist zur Kommunikation zwischen dem Telekommunikationsendgerät und dem Datenträger eingerichtet, wie beispielsweise eine Smart Card API (Application Programming Interface).

Wahlweise umfassen die Aktualisierungsdaten die Datenträgerapplikation, wobei in diesem Fall das Übertragen ein Übertragen der Datenträgerapplikation umfasst, das Weiterübertragen ein Weiterübertragen der Datenträgerapplikation umfasst, und das Aktualisieren des Datenträgers ein, z.B. durch die Datenträgerverwaltung durchgeführtes, Installieren der Datenträgerapplikation in dem Datenträger umfasst.

Die Aktualisierungsdaten umfassen wahlweise Konfigurationsdaten, wobei das Aktualisieren des Datenträgers in diesem Fall ein Konfigurieren des Datenträgers, insbesondere der Sicherheitsapplikation, mittels der Konfigurationsdaten umfasst. Die Konfigurationsdaten können direkt in der Sicherheitsapplikation installiert werden, ohne den Umweg über die als Proxy-Server genutzte Programmierschnittstelle, da ihre Installation innerhalb der Sicherheitsapplikation erfolgt.

Die Konfigurationsdaten können insbesondere Aktualisierungsdaten für die Sicherheitsapplikation umfassen. Wahlweise umfasst die Sicherheitsapplikation eine Zertifikatliste und zumindest eine Zugriffsrechteliste. Die Zertifikatliste umfasst Datenträgerapplikationszertifikate von in dem Datenträger installierten Datenträgerapplikationen. Die zumindest eine Zugriffsrechteliste gibt Zugriffsrechte von in dem Telekommunikationsendgerät installierten Endgeräteapplikationen auf in dem Datenträger installierte Datenträgerapplikationen an. Beim Konfigurieren des Datenträgers werden die Zertifikatliste und die zumindest eine Zugriffsrechteliste gemäß den Aktualisierungsdaten, genauer gemäß den Konfigurationsdaten, aktualisiert.

Die Konfigurationsdaten umfassen wahlweise ein Datenträgerapplikationszertifikat, das einen öffentlichen Schlüssel eines Anbieters der Datenträgerapplikation enthält. Das Konfigurieren des Datenträgers, insbesondere der Sicherheitsapplikation, umfasst in diesem Fall ein Eintragen, durch die Sicherheitsapplikation, des Datenträgerapplikationszertifikats in die Zertifikatsliste. Mit dem öffentlichen Schlüssel des Anbieters der Datenträgerapplikation können von dem Anbieter der Datenträgerapplikation mit dem passenden geheimen Schlüssel erstellte Signaturen verifiziert werden. Hierdurch kann verifiziert werden, dass eine in den Datenträger zu ladende Datenträgerapplikation tatsächlich vom Anbieter der Datenträgerapplikation erstellt oder zumindest authorisiert ist.

Wahlweise wird eine, insbesondere mit den Aktualisierungsdaten verknüpfte, Signatur durch die Programmierschnittstelle oder durch die Sicherheitsapplikation verifiziert, bevor der Datenträger gemäß den Aktualisierungsdaten aktualisiert wird.

Die Signatur wird wahlweise mittels eines geheimen Schlüssels eines Anbieters der Datenträgerapplikation erstellt oder ist derart erstellt worden. Die Signatur wird dann wahlweise mit dem oben angeführten öffentlichen Schlüssel verifiziert, der z.B. wie oben angegeben mit dem Datenträgerapplikationszertifikat in den Datenträger eingebracht worden ist.

Wahlweise umfasst das Bereitstellen von Aktualisierungsdaten die Schritte:
- Integrieren der Aktualisierungsdaten in ein Endgeräteapplikationszertifikat einer in dem Endgerät zu installierenden Endgeräteapplikation;
- Laden des Endgeräteapplikationszertifikat und der Endgeräteapplikation in das Telekommunikationsendgerät;
- Installieren der Endgeräteapplikation im Telekommunikationsendgerät;
- Extrahieren der Aktualisierungsdaten aus dem Endgeräteapplikationszertifikat; und
- Bereitstellen der extrahierten Aktualisierungsdaten, insbesondere durch die Programmierschnittstelle, an die Sicherheitsapplikation.

Ein erfindungsgemäßer Datenträger ist in ein Telekommunikationsendgerät einsetzbar oder eingesetzt und umfasst in dem Datenträger installierte Datenträgerapplikationen. Gemäß der Erfindung umfasst der Datenträger zudem eine in dem Datenträger installierte Sicherheitsapplikation, die eingerichtet ist, gemäß einem erfindungsgemäßen Verfahren Aktualisierungsdaten zu empfangen und zu übertragen und den Datenträger mit den Aktualisierungsdaten zu aktualisieren. Insbesondere sind die Sicherheitsapplikation - und eine Datenträgerverwaltung des Datenträgers - also in der Lage, mit einer zum Datenträger gehörigen und in dem Telekommunikationsendgerät installierten, gemäß Anspruch 1 genutzten, d.h. als Proxy-Server genutzten, Programmierschnittstelle Daten auszutauschen.

Der Datenträger ist beispielsweise eine (U)SIM-Mobilfunk-Karte oder eine sichere digitale Speicherkarte oder sichere Multimediakarte, z.B. SD oder µ-SD-Karte, also insbesondere ein in das Telekommunikationsendgerät einsetzbarer und aus dem Telekommunikationsendgerät entfernbarer Datenträger. Alternativ ist der Datenträger ein zur festen Implementierung in ein Telekommunikationsendgerät eingerichteter Datenträger, z.B. ein Embedded Secure Element oder Embedded Smart Card Chip zur festen Implementierung in ein Telekommunikationsendgerät, und wird z.B. beim Endgerätehersteller in ein Telekommunikationsendgerät eingesetzt und fest implementiert, so dass er durch einen Nutzer nicht (oder zumindest nicht zerstörungsfrei) aus dem Endgerät entfernbar ist, insbesondere ein NFC-Chip für ein NFC-fähiges Telekommunikationsendgerät. Ein Betriebssystem des Datenträgers ist wahlweise ein Java-basiertes und/oder Global-Platformkonformes Betriebssystem und/oder die Datenträgerapplikationen und die Sicherheitsapplikation sind wahlweise Java-Applets.

Ein erfindungsgemäßes Telekommunikationsendgerät hat eine Schnittstelle, z.B. einen Kartensteckplatz, so dass ein Datenträger in dem Telekommunikationsendgerät einsetzbar ist. Alternativ ist ein Datenträger, z.B. ein Embedded Secure Element oder Embedded Smart Card Chip zur festen Implementierung in ein Telekommunikationsendgerät, insbesondere auch ein NFC-Chip, fest in das Telekommunikationsendgerät eingesetzt, d.h. implementiert. In dem Telekommunikationsendgerät sind Endgeräteapplikationen installiert. Erfindungsgemäß ist in dem Telekommunikationsendgerät zudem eine Programmierschnittstelle des Datenträgers installiert, die eingerichtet ist, gemäß einem erfindungsgemäßen Verfahren Aktualisierungsdaten zu empfangen, weiterzuübertragen und optional nach Anspruch 8 bereitzustellen. Die Programmierschnittstelle ist somit eingerichtet, als Proxy-Server gegenüber dem Datenträger zu agieren, insbesondere als Proxy-Server zwischen einer Sicherheitsapplikation des Datenträgers und einer Datenträgerverwaltung des Datenträgers zu agieren. Wahlweise ist das Telekommunikationsendgerät ein Smartphone mit Android-Betriebssystem und darauf lauffähigen, so genannten Android-"Apps" als Applikationen. Die Erfindung ist für andere Betriebssysteme aber ebenso geeignet.

Im Folgenden wird die Erfindung an Hand von Ausführungsbeispielen und unter Bezugnahme auf die Zeichnung näher erläutert, in der zeigen:
- Fig. 1: eine schematische Übersicht über den Verfahrensablauf beim Aktualisieren eines Datenträgers;
- Fig. 2: eine schematische Gesamtübersicht der bei einem Verfahren nach Fig. 1 zum Einsatz kommenden Einrichtungen, beim Laden von Konfigurationsdaten;
- Fig. 3: eine schematische Detailübersicht der bei einer Ausführungsform der Erfindung gemäß Fig. 1 zum Einsatz kommenden Einrichtungen, beim Laden einer Datenträgerapplikation mit dem erfindungsgemäßen Verfahren;
- Fig. 4: beispielhafte Aktualisierungsdaten, integriert in ein Endgeräteapplikationszertifikat, gemäß einer Weiterbildung der Erfindung;
- Fig. 5: ein beispielhaftes Endgeräteapplikationszertifikat für die Weiterbildung aus Fig. 4.

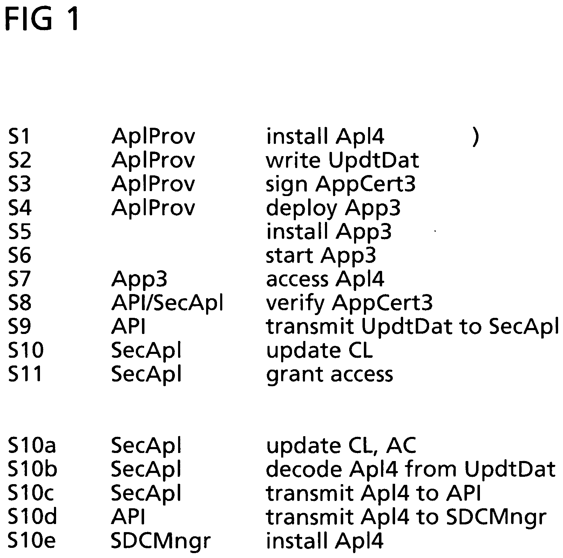

Fig. 1 zeigt eine schematische Übersicht über den Verfahrensablauf beim Aktualisieren eines Datenträgers 400. Die Verfahrensschritte S1 bis S11 beschreiben eine Aktualisierung des Datenträgers 400 durch eine Installation von Konfigurationsdaten 111, 418 für eine in Schritt S1 bereits (evtl. sogar viel früher) installierte Datenträgerapplikation 110, wie sie ohne die Erfindung oder zusätzlich zur Erfindung erfolgen kann. Die Schrittfolge S2 bis S9, S10a bis S10e, S11 entspricht einer Ausführungsform der Erfindung, mit einer Installation einer dem Datenträger 400 neu hinzugefügten Datenträgerapplikation 110 in Schritt S10e, unter Verwendung einer in einem Smartphone 300 vorgesehenen API 330 als Proxy-Server (Schrittfolge 10a-10e, insbesondere 10c-10e, an Stelle von Schritt 10) zwischen Teilen einer SD-Karte 400, die per se nicht direkt miteinander kommunizieren können.

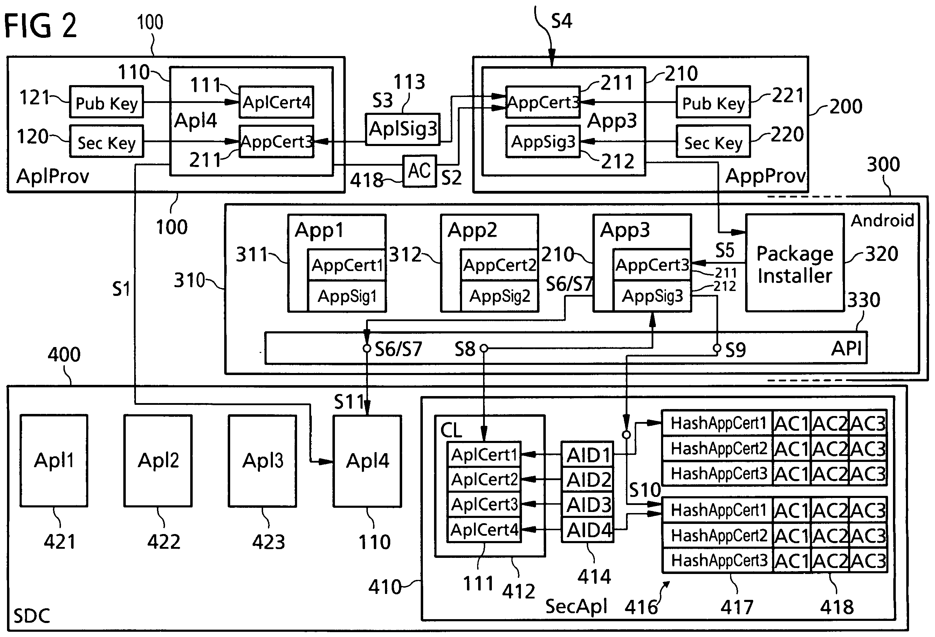

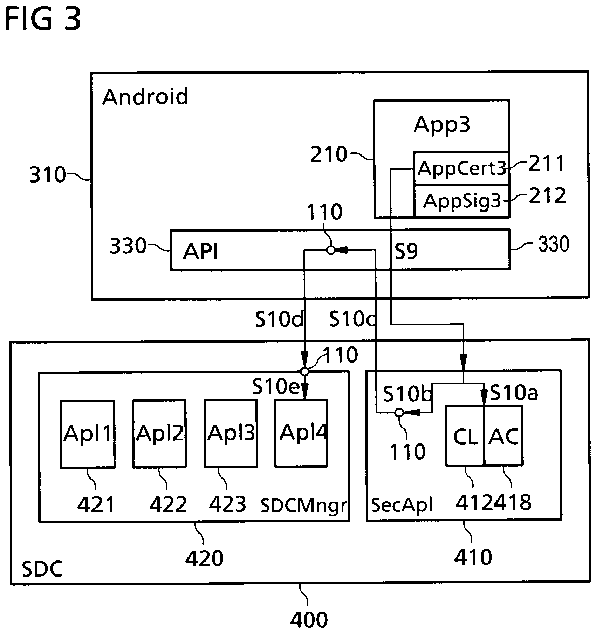

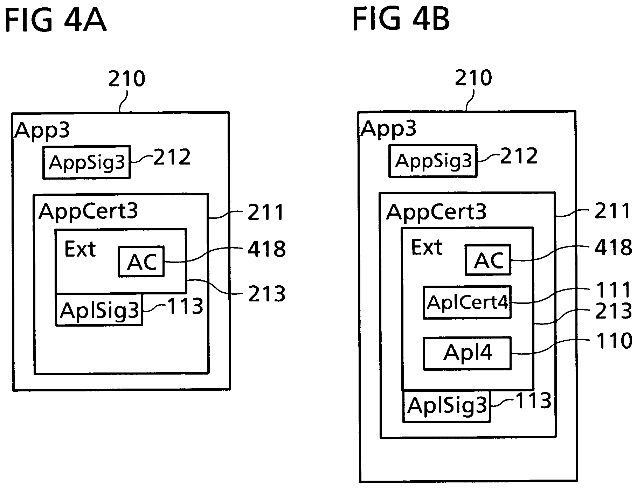

Nachfolgend wird die Aktualisierung der SD-Karte 400 gemäß den Verfahrensschritten S1 bis S11 im Zusammenhang mit den Figuren 2 und 4a erläutert. Die erfindungsgemäße Verarbeitung und Installation einer dem Datenträger 400 neu hinzugefügten Datenträgerapplikation 110 gemäß der Schrittfolge S2 bis S9, S10a bis S10e, S11, mit der API 330 als Proxy gemäß Schrittfolge 10c-10e, wird im Zusammenhang mit den Figuren 3 und 4b erläutert.

Der Datenträger 400 ist ein Secure Element zum Betrieb in einem Telekommunikationsendgerät in Form eines modernen Smartphones 300, auf dem das Kleincomputer-Betriebssystem "Android" 310 der Firma Google installiert ist, also z.B. eine (U)SIM-Karte oder eine als (U)SIM-Karte verwendete Secure MicroSD-Karte für ein solches Endgerät. Natürlich ist die Erfindung auch auf andere Computerformate mit anderen Betriebssystemen sinnvoll abwendbar und darauf implementierbar, z.B. auf persönliche digitale Assistenten (PDA), Laptops, Notebooks, Tablet-PCs und sonstige portable Kleincomputer, die häufig auch Telekommunikations- oder Mobilfunkfunktionalitäten bereitstellen.

Die auf dem Android-Smartphone 300 lauffähigen Endgeräteapplikationen sind sogenannte "Apps" 210, 311, 312 (App3, Appl, App2), also speziell auf die Ressourcen, Einsatzbereiche und Anwendungen von Smartphones 300 angepasste Applikationen, die z.B. aus dem Android-Marketplace heruntergeladen und auf dem Smartphone 300 installiert werden können. Neben dem Android-Betriebssystem 310 mit den darunter laufenden Android-Apps 210, 311, 312 existieren aber auch noch weitere Smartphone-Betriebssysteme mit spezialisierten Smartphone-Applikationen, auf denen die vorliegende Erfindung auch implementiert werden kann. Android eignet sich aufgrund seines Open-Source-Konzepts jedoch gut für die nachfolgende beispielhafte Erläuterung der Erfindung.

Beteiligt an dem Verfahren ist neben dem Smartphone 300 ein sicherer digitaler Datenträger in Form einer SD-Karte 400 (SDC), die, eingefügt in einen hierfür vorgesehenen Steckplatz des Smartphones 300, einen sicheren Speicher bzw. eine sichere Speichererweiterung des Smartphones 300 repräsentiert. Die SD-Karte 400 umfasst vorzugsweise ein Java-basiertes Betriebssystem, z.B. Java-Card oder dergleichen, so dass die auf der SD-Karte 400 installierten Datenträgerapplikationen 110, 421, 422, 423 (Apl4, Apl1, Apl2, Apl3) Applets bzw. Java-Applets sind. Selbstverständlich sind als sichere Datenträger 400 gemäß der vorliegenden Erfindung auch anderweitige in einem Smartphone 300 einsetzbare Datenträger mit Prozessor und weiteren Rechenressourcen geeignet, zum Beispiel (U)SIM-Mobilfunkkarten, microSD-Karten, sichere Multimediakarten und dergleichen. Auch können diese Datenträger mit beliebigen Smartcard- oder Speicherkarten-Betriebssystemen und darauf lauffähigen Applikationen ausgestattet sein.

Ein besonderes auf der SD-Karte 400 installiertes Applet ist das sogenannte Sicherheits-Applet 410 (SecApl, "security applet"), welches im Zusammenhang mit dem Zugriff einer App 210 auf ein Applet 110 und mit der Aktualisierung eines Applets 110 Sicherheits- und Kontrollfunktionen übernimmt.

Das Sicherheits-Applet 410 verwaltet eine Sicherheitsstruktur, umfassend eine Zertifikatliste 412 (CL), in der verschiedene Datenträgerapplikationszertifikate in Form von Applet-Zertifikaten 111 (AplCert1 bis AplCert4) abgelegt sind. Ferner verwaltet das Sicherheits-Applet 410 auch eine oder mehrere Zugriffsrechtelisten 416, die über eine Applet-Identifikation 414 (AID1 bis AID4) den Zertifikaten 111 der Zertifikatliste 412 zugeordnet sind. In den Zugriffsrechtelisten 416 sind wiederum App-Identifikationen 417 (HashApp-Certl bis HashAppCert3) niedergelegt, die jeweils eine Liste 416 von Zugriffsrechten 418 (AC1, AC2, AC3, "access condition") adressieren, welche die Zugriffsrechte 418 der durch die App-ID 417 bezeichneten App 210 auf dasjenige Applet 110 angeben, dessen Applet-ID 414 auf die betreffende Zugriffsrechteliste 416 verweist.

Sofern eine App 210 auf ein Applet 110 zugreifen muss, kann das Sicherheits-Applet 410 über die jeweilige Applet-ID 414 prüfen, ob die betreffende App 210 die notwendigen Zugriffsrechte 418 besitzt. Identifiziert werden die der App 210 über die Zugriffsrechteliste 416 zugeordneten Zugriffsrechte 418 durch die App-ID 417, die einem Hash-Wert des App-Zertifikats 211 entspricht, der bei jeder Prüfung der Zugriffsrechte 418 erneut gebildet wird.

Für den Fall, dass eine App 210 einen Zugriff auf ein Applet 110 benötigt, dessen Zugriffsrechte 418 dies nicht erlauben bzw. welches noch gar nicht als Applet 110 auf der SD-Karte 400 installiert ist, kann eine entsprechende Aktualisierung des Applets 110 erfolgen (d.h. eine Konfiguration des Applet 110 durch eine Aktualisierung der Zugriffsrechte 418 zwischen dem Applet 110 und anderen Applets und/oder der Installation des Applets 110), indem die hierfür benötigten Aktualisierungsdaten in ein Endgeräteapplikationszertifikat in Form eines App-Zertifikats 211 (AppCert3) gemäß dem Verfahren der Fig. 1 eingebracht werden und transparent für das Android-Betriebssystem 310 an das Sicherheits-Applet 410 auf der SD-Karte 400 weitergeleitet werden, so dass dort eine den Aktualisierungsdaten entsprechende Konfiguration des Applets 110 erfolgen kann.

Im Folgenden wird die Schrittfolge S1-S11 in Verbindung mit Fig. 2, Fig. 4a betrachtet. Die erfindungsgemäße Verwendung der API 330 als Proxy-Server ist hierbei nicht erforderlich. Für eine neu in das Endgerät geladene App 210 (App3), die Zugriff auf ein bereits im Datenträger 400 vorhandenes Applet Apl4 110 benötigt, wird die Aktualisierung der Zugriffsrechte 418 zwischen der neu geladenen App 210 (App3) und dem Applet Apl4 110 wie folgt vorgenommen.

In einem Schritt S1 ("install Apl4") wird bzw. wurde das Applet Apl4110 von dem Applet-Anbieter 100 (AplProv) oder zumindest auf dessen Veranlassung auf der SD-Karte 400 installiert, beispielsweise im Rahmen eines Herstellungsprozesses der SD-Karte 400, z.B. bei deren Initialisierung oder Personalisierung. Hierbei werden auch die zu diesem Zeitpunkt bekannten Zugriffsrechte 418 verschiedener Apps 311, 312 (Appl, App2) auf dieses Applet 110 (Apl4) in dem Sicherheits-Applet 410 der SD-Karte 400 hinterlegt.

Die Schritte S2 bis S11 betreffen die Installation der neu zu installierenden App 210 (App3) in dem Endgerät 300 und die Aktualisierung der Zugriffsrechte 418 der App 210 (App3) auf das bereits installierte Applet 110 (Apl4).

Hierzu ist in dem Smartphone 300, als Ergänzung oder Erweiterung des Android-Betriebssystems 310, eine Programmierschnittstelle 330 (API) zum standardisierten Zugriff auf die SD-Karte 400 installiert. Die API 330 wirkt mit dem Sicherheits-Applet 410 zusammen, um eine sichere Prozedur zur nachträglichen Aktualisierung des Applets 110 zu implementieren. Bei bereits installierten Applets 421, 422, 423 (Apl1, Apl2, Apl3) kann die API 330 in Kooperation mit dem Sicherheits-Applet 410 die Zugriffsrechte 418 einer auf ein Applet 421, 422, 423 zugreifenden App 311, 312 prüfen.

Ausgangspunkt der Zugriffsrechte-Aktualisierung ist das App-Zertifikat 211, welches, neben der App 210 selbst, Teil des Installationspakets der neu zu installierenden App 210 ist und von einer vertrauenswürdigen Stelle auf den öffentlichen Schlüssel 221 des App-Anbieters 200 (AppProv) der App 210 ausgestellt ist. Neben dem App-Zertifikat 211 existiert im Installationspaket der App 210 auch die Signatur 212 (AppSig3) der App 210, mit der der App-Anbieter 200 mit Hilfe seines geheimen Schlüssels 220 die Echtheit der App 210 garantiert.

Im Schritt S2 ("write UpdtDat") integriert der Applet-Anbieter 100 die Aktualisierungsdaten, die hier die Gestalt von Zugriffsrechten 418 haben, also Konfigurationsdaten sind, in das App-Zertifikat 211, um dem Sicherheits-Applet 410 auf diesem Wege die von dem Applet-Anbieter 100 bereitgestellten und von der App 210 benötigten Zugriffsrechte 418 zur entsprechenden Konfiguration des Datenträgers im Hinblick auf das Applet 110 zu Verfügung kommen zu lassen.

Im Schritt S3 ("sign AppCert3") stellt der Anbieter 100 des zu aktualisierenden Applets 110 mit Hilfe seines geheimen Schlüssels 120 eine Signatur 113 (AplSig3) des um die Aktualisierungsdaten ergänzten App-Zertifikats 211 aus, welche mit dem App 210 verbunden wird, z.B. indem die Signatur 113 in ein Installationspaket der App 210 eingebracht wird.

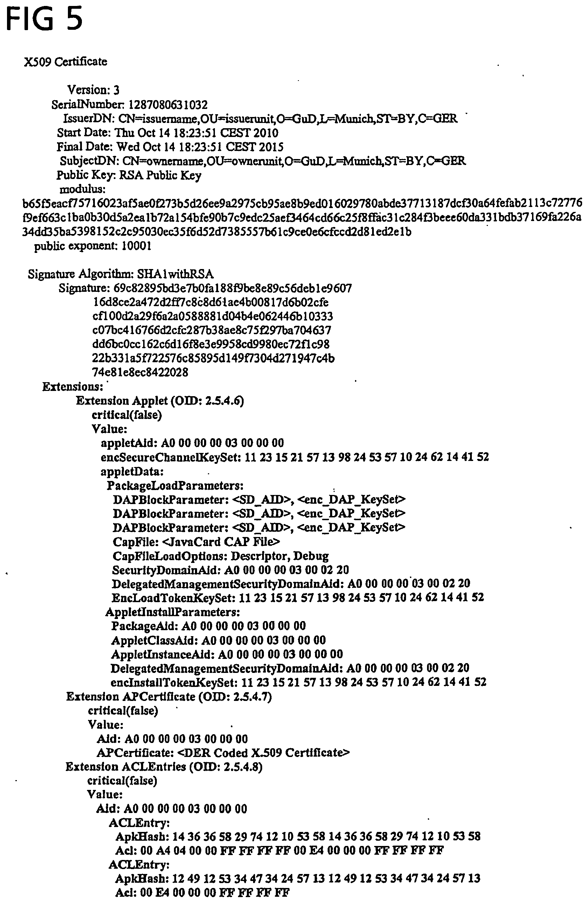

Figur 4a zeigt, für den Fall dass nur Konfigurationsdaten in der SD-Karte 400 neu zu installieren sind, das zugehörige Applet hingegen schon in der SD-Karte 400 vorhanden ist, die wesentlichen Inhalte eines solches Installationspakets der App App3 210, umfassend die Signatur 212 des App-Anbieters 200, das App-Zertifikat 211 und die Signatur 113 des Applet-Anbieters 100. Bei dem vorliegenden Ausführungsbeispiel handelt es sich um ein App-Zertifikat 211 gemäß dem X.509-Zertifikatformat, so dass die Aktualisierungsdaten in Form von Zugriffsrechten 418 in die gemäß dem X.509-Standard vorgegebenen Erweiterungsfelder 213 (Ext) eingetragen werden können. Diese gemäß dem X.509-Standard vorgegebenen Erweiterungsfelder können weitere Daten aufnehmen, die mit der eigentlichen Funktion des Zertifikats 211, nämlich dem vertrauenswürdigen Bereitstellen eines öffentlichen Schlüssels 221, nicht im Zusammenhang stehen müssen. Ein Beispiel für ein App-Zertifikat 211 gemäß dem X.509-Standard mit darin integrierten Erweiterungsdaten ("Extensions") zeigt Fig. 5.

Der Mechanismus der Erweiterungsfelder 213 wird genutzt, um die Aktualisierungsdaten derart in das App-Zertifikat 211 einzubringen, dass sie für das Smartphone 300 und seine Funktionen und Software-Komponenten - eventuell mit Ausnahme der API 330, die eine Programmierschnittstelle der SD-Karte 400 ist - transparent sind. Das App-Zertifikat 211 repräsentiert also ein Containerdatenformat, das in den Erweiterungsfeldern 213 Daten von außerhalb des Smartphones 300, z.B. von dem Applet-Anbieter 100, transparent durch das Smartphone 300 hindurch bis in die SD-Karte 400 bzw. dessen Sicherheits-Applet 410 transportieren kann. Die in den Erweiterungsfeldern 213 des App-Zertifikats 211 abgelegten Aktualisierungsdaten bleiben von dem Smartphone 300 deshalb unberücksichtigt.

Die Signatur 113 des Applet-Anbieters 100 ist ein mit dem geheimen Schlüssel 120 des Applet-Anbieters 100 verschlüsseltes Chiffrat des App-Zertifikats 211 und kann in dem Installationspaket der App 210 separat vorliegen (vgl. Fig. 4). Die Signatur 113 kann beispielsweise gemäß dem X.509-Standard in das Signaturfeld eingebracht werden. Das App-Zertifikat 211 kann in den Erweiterungsfeldern 213 (noch weitere) Informationen des Applet-Anbieters 100 aufnehmen, die das Applet 110 betreffen, beispielsweise das Applet-Zertifikat 111 mit dem öffentlichen Schlüssel 121 des Applet-Anbieters 100 oder (in Fig. 4a nicht gezeigt; vgl. hierzu Fig. 4b und Text weiter unten) den Bytecode des gesamten Applets 110. Ebenso kann, neben den Zugriffsrechten AC 418, auch die eindeutige App-ID 417 als Erweiterung 213 in dem App-Zertifikat 211 vorliegen.

Die derart ausgestattete App 210 wird dann von dem Applet-Anbieter 100 im Schritt S4 ("deploy App3") in einem öffentlichen App-Markt potentiellen Nutzern zur Installation auf ihrem Smartphone angeboten, beispielsweise im so genannten "Google Market Place". Von dort wird die App 210 im Schritt S5 ("install App3") heruntergeladen und unter dem Android-Betriebssystem 310 in dem Smartphone 300 installiert.

Da die im "Market Place" oder einer anderen öffentlichen Plattform angebotene App 210 die Signatur 113 des Applet-Anbieters 100 trägt, welche über das gesamte App-Zertifikat 211 mitsamt den Zugriffsrechten 418 gebildet ist, repräsentiert die Signatur 113 eine Autorisierung des Zugriffs der App 210 auf das Applet 110 durch den Applet-Anbieter 100.

Im Schritt S5 wird die App 210 unter dem Android-Betriebssystem 310 mittels einer speziellen Installationsroutine 320 ("package installer") installiert, indem die Installationsroutine 320 zunächst die Signatur 212 des App-Anbieters 200 prüft. Hierzu wird die Signatur 212 mit dem öffentlichen Schlüssel 221 des App-Anbieters 200 entschlüsselt und mit dem signierten Klartext der App 210 verglichen. Den öffentlichen Schlüssel 221 erhält die Installationsroutine 320 aus dem der App 210 beiliegenden App-Zertifikat 211, welches die Vertrauenswürdigkeit des öffentlichen Schlüssels 221 garantiert.

Im Schritt S6 ("start App3") wird die installierte App 210 von einem Benutzer des Smartphones 300 gestartet und diese versucht dann in einem Schritt S7 ("access Apl4") auf das Applet Apl4 110 zuzugreifen. Hierzu hat die App App3 210 jedoch zunächst noch keine Zugriffsrechte 418 in der Zugriffsrechteliste 416 des Sicherheits-Applet 410. Die benötigten Zugriffsrechte 418 liegen bisher lediglich in dem App-Zertifikat 211 vor.

Anschließend wird im Schritt S8 ("verify AppCert3") das App-Zertifikat 211 von der API 330 verifiziert, indem die Signatur 113 mit dem öffentlichen Schlüssel 121 des Applet-Anbieters 100 entschlüsselt und mit dem Klartext des App-Zertifikats 211 verglichen wird. Abweichend hiervon kann die Verifikation des App-Zertifikats 211 und die sich daran anschließende Aktualisierung der Zugriffsrechteliste 416 auch unmittelbar nach oder sogar bei der der Installation der App 210 in Schritt S5 erfolgen. Die Verifikation des Schritts S8 kann bei einer bevorzugten Ausführungsvariante auch in der sicheren Umgebung der SD-Karte 400 von dem Sicherheits-Applet 410 vorgenommen werden. In diesem Fall wird das App-Zertifikat 211 von der Programmierschnittstelle 330 an das Sicherheits-Applet 410 durchgereicht.

Bei der Verifikation der Signatur 113 erhält die API 330 (oder die Sicherheits-Applikation 410) den öffentlichen Schlüssel 121 des Applet-Anbieters 100 aus der Zertifikatliste 412, in der das Applet-Zertifikat 111 bei der in Schritt S1 durchgeführten Installation des Applets 110 in der SD-Karte 400 hinterlegt wurde. Sofern die Verifikation der Signatur 113 erfolgreich ist, werden die in dem Erweiterungsfeld 213 des App-Zertifikats 211 angegebenen Aktualisierungsdaten, also zumindest die Zugriffsrechte 418, von der API 330 extrahiert und in Schritt S9 ("transmit UpdtDat to SecApl") an das Sicherheits-Applet 410 zur Konfiguration des Applets 110 weitergegeben. Falls die Verifikation in Schritt S8 durch das Sicherheits-Applet 410 durchgeführt wird, benachrichtigt dieses bei erfolgreicher Verifikation die API 330 dahingehend, dass die Aktualisierungsdaten 418 aus dem App-Zertifikat 211 extrahiert werden können. Alternativ kann auch das Sicherheits-Applet 410 die Aktualisierungsdaten 418 aus dem App-Zertifikat 211 extrahieren. Beim oder nach dem Extrahieren der Aktualisierungsdaten 418 muss deren Integrität jedoch nicht weiter geprüft werden, da diese bereits durch die Verifikation der Signatur 113 des Applet-Anbieters 100 in Schritt S8 geprüft wurde.

In dem Schritt S10 ("update CL") konfiguriert das Sicherheits-Applet 410 schließlich die SD-Karte 400 in Bezug auf das Applet 110, indem die Zugriffsrechteliste 416 mit den Aktualisierungsdaten in Form der Zugriffsrechte 418 der App 210 auf das Applet 110 aktualisiert werden. Hierzu wird die relevante Zugriffsrechteliste 416 über die Applet-ID 414 ermittelt. Danach wird die App-ID 417 in Form eines SHA-1-Hashwerts des App-Zertifikats 211 gebildet und mit den bereits in der Zugriffsrechteliste 416 verzeichneten App-IDs 417 verglichen bzw. dort mit den entsprechenden Zugriffsrechten 418 neu eingetragen. Bei einem späteren Zugriff der App 210 auf das Applet 110 kann das Sicherheits-Applet 410 über die Applet-ID 414 und die App-ID 417 jederzeit prüfen, ob die benötigten Zugriffsrechte 418 vorliegen. Schließlich gewährt die Sicherheits-Applikation 410 in Schritt S11 ("grant access") den Zugriff auf das Applet 110 durch die App 210.

Im Folgenden wird die Schrittfolge S2 bis S9, S10a bis S10e und S11 in Verbindung mit Fig. 3, Fig. 4b betrachtet, einschließlich der erfindungsgemäßen Verwendung der API 330 als Proxy-Server. Der Schritt 10 ist durch die Schrittfolge 10a-10e ersetzt, entsprechend der Installation eines neuen Applets 110 in die SD-Karte 400 über die API 330 als Proxy-Server. Gemäß der Ausführungsform der Erfindung aus den Figuren 3 und 4b wird dem Sicherheits-Applet 410 ein bisher nicht auf der SD-Karte 400 installiertes Applet 110 mittels der Containerdatenstruktur des App-Zertifikats 211 bereitgestellt. Die Aktualisierung der SD-Karte 400 hinsichtlich des Applets 110 umfasst hierbei die Installation des Applets 110 auf der SD-Karte 400 und die Einrichtung der entsprechenden Zugriffsrechte 418. Bei der Installation des Applets 110 in die SD-Karte 400 wird die im Smartphone 300 implementierte Programmierschnittstelle API 330 als Proxy-Server zwischen dem Sicherheits-Applet 410 und einer Datenträgerverwaltung der SD-Karte 400 verwendet, um das aus dem App-Zertifikat 211 extrahierte und beim Sicherheits-Applet 410 entgegengenommene Applet 110 in die SD-Karte 400 installieren zu können. Der weitere Ablauf dieser Ausführungsform ergibt sich aus der Sequenz der Schritte S2 bis S9, S10a bis S10e und S11 der Fig. 1 durch eine mit der ersten Ausführungsform vergleichbare Wechselwirkung zwischen der API 330 auf dem Smartphone 300 und dem Sicherheits-Applet 410 auf der SD-Karte 400.

Der Schritt S1 der vorzeitigen Installation des Applets 110 entfällt hierbei, da es gerade der Gegenstand der Erfindung ist, Aktualisierungsdaten, hier das Applet 110, nachträglich zu installieren. Ferner fällt bei dieser Ausführungsform der Konfigurationsschritt S10 weg; vielmehr wird das Applet 110 mittels der Schritte S10a bis S10e konfiguriert und installiert.

In Schritt S2 werden von dem Applet-Anbieter 100 nicht nur, wie im Zusammenhang mit Fig. 2 und 4a geschildert, Zugriffsrechte 418 der App 210 auf das Applet 110 in das App-Zertifikat 211 integriert, sondern auch das Applet 110 selbst, bzw. dessen Bytecode, sowie das Applet-Zertifikat 111 mit dem öffentlichen Schlüssel 121 des Applet-Anbieters 100. In Schritt S3 signiert der Applet-Anbieter 100 das App-Zertifikat 211 mit den gesamten Aktualisierungsdaten mit seinem geheimen Schlüssel 120 und bildet die Signatur 113. Das Installationspaket der App 210 umfasst neben den Signaturen 212 und 113 ein App-Zertifikat 211 gemäß Fig. 4b, umfassend Erweiterungsfelder 213 gemäß dem X.509-Standard mit Zugriffsrechten 418, dem Bytecode des zu installierenden Applets 110 und dem Applet-Zertifikat 111.

Insofern befindet sich nach dem Schritt S4 also eine App 210 in dem "Market Place" oder auf einer sonstigen öffentlichen Download-Plattform, welche in Form eines Datencontainers auch ein auf der SD-Karte 400 zu installierendes Applet 110 umfasst, autorisiert durch den Applet-Anbieter 100 mittels der Signatur 113 über das gesamte App-Zertifikat 211.

Um die Integrität der Aktualisierungsdaten in der Erweiterung 213, insbesondere des Bytecodes des Applets 110, sicherzustellen, ist eine Ende-zu-Ende-Verschlüsselung zwischen dem Applet-Anbieter 100 und der SD-Karte 400 bzw. deren Sicherheits-Applet 410 vorgesehen. Diese kann beispielsweise durch eine symmetrische AES-Verschlüsselung realisiert werden, wobei der gemeinsame geheime Schlüssel nur dem Applet-Anbieter 100 und dem Sicherheits-Applet 410 vorliegt.

Der weitere Ablauf der Schritte S5 bis S8 ist dann analog zu demjenigen, der an Hand von Fig. 2 und 4a beschrieben wurde. Wichtig ist hier lediglich, dass im Schritt S8 das App-Zertifikat 211 und dessen Erweiterungen 213 geprüft werden, indem die Signatur 113 mit dem öffentlichen Schlüssel 121 des Applet-Anbieters 100 verifiziert wird, dessen Applet-Zertifikat 111 (noch) nicht in der Zertifikatliste 412 vorliegt, sondern in einem Erweiterungsfeld 213 des App-Zertifikats 211. Der Verifikationsschritt S8 wird vorzugsweise von dem Sicherheits-Applet 410 durchgeführt, so dass die Verifikation in der abgesicherten Umgebung der SD-Karte 400 stattfinden kann.

Nach erfolgreicher Verifikation der Signatur 113 des Applet-Anbieters 100 extrahiert die API 330 in Schritt S9 die Aktualisierungsdaten (also die Zugriffsrechte 418, das Applet 110 und das Applet-Zertifikat 111) aus dem App-Zertifikat 211 und leitet diese an das Sicherheits-Applet 410 weiter. Wie bei der ersten Ausführungsform können die Aktualisierungsdaten aber auch direkt von dem Sicherheits-Applet 410 extrahiert werden.

Vergleichbar mit dem Schritt S10 werden dann in Schritt S10a ("update CL, AC") die Zugriffsrechte 418 in der entsprechenden Zugriffsrechteliste 416 hinterlegt - identifiziert durch den Hash-Wert des App-Zertifikats 211 als App-ID 417. Hierbei wird dann auch die Applet-ID 414 in dem Sicherheits-Applet 410 hinterlegt und das aus der Erweiterung 213 des App-Zertifikats 211 extrahierte Applet-Zertifikat 111 mit dem öffentlichen Schlüssel 121 des Applet-Anbieters 100 wird in der Zertifikatliste 412 hinterlegt. Es wird insofern eine gänzlich neue Zugriffsrechteliste 416 ausgehend von der Applet-ID 414 erstellt, in der, adressiert durch die App-ID 417 in Form eines Hashwerts des App-Zertifikats 211, die neuen Zugriffsrechte 418 der App 210 auf das Applet 110 hinterlegt werden.

In Schritt S10b ("decode Apl4 from UpdtDat") wird der extrahierte Bytecode des Applets 110, der dem Sicherheits-Applet 410 noch in der von dem Applet-Anbieter 100 verschlüsselten oder kodierten Form vorliegt, in der sicheren Umgebung des Sicherheits-Applets 410 dekodiert und/oder entschlüsselt. In Schritt S10b werden auch sämtliche weiteren erforderlichen Operationen zur Vorbereitung der Installation des Applets 110 durchgeführt.

Der Bytecode des Applets 110 wird anschließend nicht direkt von dem Sicherheits-Applet 410 installiert. Gemäß dem im Smartphone-Bereich zumindest zukünftig relevanten Global-Plattform-Standard (vgl. *www.globalplatform. org*) ist eine solche direkte Installation nämlich nicht vorgesehen. Stattdessen ist die Installation eines Applets 110 über das Smartphone 300 bzw. dessen API 330 vorzunehmen. Somit fungiert die API 330 in den verbleibenden Schritten S10c bis S10e als Vermittler- bzw. Proxy-Einheit zwischen dem Sicherheits-Applet 410 und dem "Card-Manager" 420 (SDCMngr) der SD-Karte 400, der die zentrale Verwaltungseinheit der SD-Karte 400 darstellt und als solche für die Installation neuer Applets 110 verantwortlich ist.

Um die Datenintegrität des Bytecodes des Applets 110 zu gewährleisten, kann in Schritt S10b eine weitere Verschlüsselung des Applets 110 durchgeführt werden, da das Applet 110 die sichere Umgebung des Sicherheits-Applets 410 wieder verlässt und über die potentiell unsichere API 330 dem Card Manager 420 zur Verfügung gestellt wird. Insofern ist entweder eine weitere Ende-zu-Ende-Verschlüsselung zwischen dem Sicherheits-Applet 410 und dem Card Manager 420 vorgesehen, oder der Bytecode des Applets 110 wird nicht bereits in Schritt S10b im Sicherheits-Applet 410 entschlüsselt, sondern erst im Schritt S10e in dem Card Manager 420 im Rahmen der Installation des Applets 110. Im letzteren Fall besteht eine Ende-zu-Ende-Verschlüsselung zwischen dem Applet-Anbieter 100 und dem Card-Manager 420, wobei die erforderlichen Schlüssel in der SD-Karte 400, bzw. in dem Sicherheits-Applet 410 und/oder in dem Card Manager 420 sicher verwahrt werden.

In den Schritten S10c und S10d wird dann, entsprechend dem Global-Plattform-Standard, das Applet 110 von dem Sicherheits-Applet 410 an die API 330 übertragen und von dieser an den Card-Manager 420 zur letztendlichen Installation weitergeleitet. Die API 330 fungiert also gegenüber dem Card-Manager 420 als Host-Einheit, die die bereitzustellenden Daten, nämlich das Applet 110, ihrerseits von dem Sicherheits-Applet 410 der SD-Karte 400 entgegennimmt.

## Patentansprüche

1. Verfahren zum Aktualisieren (S2-S9, S10a-S10e, S11) eines Datenträgers (400) im Hinblick auf eine in dem Datenträger (400) ausführbare Datenträgerapplikation (110), wobei der Datenträger (400) in einem Telekommunikationsendgerät (300) eingesetzt ist, umfassend die Schritte:
- Bereitstellen, durch das Telekommunikationsendgerät (300), von Aktualisierungsdaten (110, 111, 418) an eine in dem Datenträger (400) installierte Sicherheitsapplikation (410) (S9);
- Aktualisieren des Datenträgers (400) gemäß den Aktualisierungsdaten (110, 111, 418), das Aktualisieren des Datenträgers (400) umfassend die Schritte:
- Übertragen (S10c) zumindest eines Teils (110) der Aktualisierungsdaten (110, 111, 418) von der Sicherheitsapplikation (410) an eine in dem Telekommunikationsendgerät (300) installierte, zur Kommunikation zwischen dem Telekommunikationsendgerät (300) und dem Datenträger (400) eingerichtete Programmierschnittstelle (330);
- Weiterübertragen (S10d) des übertragenen (S10c) zumindest Teils (110) der Aktualisierungsdaten (110, 111, 418) von der Programmierschnittstelle (330) an eine in dem Datenträger (400) installierte Datenträgerverwaltung (420) des Datenträgers (400);
- so dass die Programmierschnittstelle (320) eine Kommunikation zwischen den beiden räumlich innerhalb des Datenträgers (400) vorgesehenen, aber kommunikationstechnisch voneinander getrennten Instanzen Sicherheitsapplikation (410) und Datenträgerverwaltung (420) ermöglicht; und
- Aktualisieren (10e) des Datenträgers (400) durch die Datenträgerverwaltung (420) gemäß dem weiterübertragenen zumindest Teil (110) der Aktualisierungsdaten (110, 111, 418).

2. Verfahren nach Anspruch 1, wobei
- die Aktualisierungsdaten (110, 111, 418) die Datenträgerapplikation (110) umfassen,
- das Übertragen (S10c) ein Übertragen der Datenträgerapplikation (110) umfasst,
- das Weiterübertragen (S10d) ein Weiterübertragen der Datenträgerapplikation (110) umfasst, und
- das Aktualisieren des Datenträgers (400) ein Installieren (10e) der Datenträgerapplikation (110) in dem Datenträger (400) umfasst.

3. Verfahren nach Anspruch 1 oder 2, wobei die Aktualisierungsdaten Konfigurationsdaten (111, 418) umfassen, und wobei das Aktualisieren des Datenträgers (400) ein Konfigurieren (S10a) des Datenträgers (400), insbesondere der Sicherheitsapplikation (410), mittels der Konfigurationsdaten (111, 418) umfasst.

4. Verfahren nach Anspruch 3, wobei
- die Sicherheitsapplikation (410) eine Zertifikatliste (412) und zumindest eine Zugriffsrechteliste (416) umfasst,
- wobei die Zertifikatliste (412) Datenträgerapplikationszertifikate (111) von in dem Datenträger (400) installierten Datenträgerapplikationen (110, 421, 422, 423) umfasst und die zumindest eine Zugriffsrechteliste (416) Zugriffsrechte (418) von in dem Telekommunikationsendgerät (300) installierten Endgeräteapplikationen (210, 311, 312) auf in dem Datenträger (40) installierte Datenträgerapplikationen (110, 421-423) angibt, und wobei
- beim Konfigurieren des Datenträgers (400) die Zertifikatliste (412) und die zumindest eine Zugriffsrechteliste (416) gemäß den Aktualisierungsdaten (111, 418) aktualisiert werden (S10a).

5. Verfahren nach Anspruch 4, wobei die Konfigurationsdaten (111, 418) ein Datenträgerapplikationszertifikat (111) mit einem öffentlichen Schlüssel (121) eines Anbieters (100) der Datenträgerapplikation (110) umfassen, und wobei das Konfigurieren (S10a) des Datenträgers (400), insbesondere der Sicherheitsapplikation (410), ein Eintragen, durch die Sicherheitsapplikation (410), des Datenträgerapplikationszertifikats (111) in die Zertifikatsliste (412) umfasst.

6. Verfahren nach einem der Ansprüche 1 bis 5, wobei eine, insbesondere mit den Aktualisierungsdaten (110, 111, 418) verknüpfte, Signatur (113) durch die Programmierschnittstelle (330) oder durch die Sicherheitsapplikation (410) verifiziert wird (S8), bevor der Datenträger (400) gemäß den Aktualisierungsdaten (110, 111, 418) aktualisiert wird (S10a, S10e).

7. Verfahren nach Anspruch 6, wobei die Signatur (113) mittels eines geheimen Schlüssels (120) eines Anbieters (100) der Datenträgerapplikation (110) erstellt wird oder worden ist (S3).

8. Verfahren nach einem der Ansprüche 1 bis 7, das Bereitstellen von Aktualisierungsdaten (110, 111, 418) umfassend die Schritte:
- Integrieren (S2) der Aktualisierungsdaten (110, 111, 418) in ein Endgeräteapplikationszertifikat (211) einer in dem Endgerät (300) zu installierenden Endgeräteapplikation (210);
- Laden des Endgeräteapplikationszertifikat (211) und der Endgeräteapplikation (210) in das Telekommunikationsendgerät (300);
- Installieren (S5) der Endgeräteapplikation (210) in dem Telekommunikationsendgerät (300);
- Extrahieren (S9) der Aktualisierungsdaten (110, 111, 418) aus dem Endgeräteapplikationszertifikat (211); und
- Bereitstellen der extrahierten Aktualisierungsdaten (110, 111, 418), insbesondere durch die Programmierschnittstelle (330), an die Sicherheitsapplikation (410) (S9).

9. Datenträger (400), in ein Telekommunikationsendgerät (300) eingesetzt, umfassend in dem Datenträger (400) installierte Datenträgerapplikationen (421, 422, 423), eine in dem Datenträger (400) installierte Sicherheitsapplikation (410) und eine in dem Datenträger (400) installierte Datenträgerverwaltung (420), die zur Ausführung eines der Verfahren nach einem der Ansprüche 1 bis 8 eingerichtet sind.

10. Telekommunikationsendgerät (300), in das ein Datenträger (400) nach Anspruch 9 eingesetzt ist, umfassend in dem Telekommunikationsendgerät (300) installierte Endgeräteapplikationen (311, 312) und eine Programmierschnittstelle (330) des Datenträgers (400), die eingerichtet ist, gemäß einem Verfahren nach einem der Ansprüche 1 bis 8 zumindest einen Teil (110) von Aktualisierungsdaten (110, 111, 418) zu empfangen, weiterzuübertragen und optional nach Anspruch 8 bereitzustellen.

## Claims

1. A method for updating (S2-S9, S10a-S10e, S11) a data carrier (400) with regard to a data-carrier application (110) executable in the data carrier (400), with the data carrier (400) being inserted in a telecommunication end device (300), comprising the steps of:
- making updating data (110, 111, 418) available to a security application (410) installed in the data carrier (400) (S9), through the telecommunication end device (300);
- updating the data carrier (400) according to the updating data (110, 111, 418), the updating of the data carrier (400) comprising the steps of:
- transferring (S10c) at least a part (110) of the updating data (110, 111, 418) from the security application (410) to a programming interface (330) installed in the telecommunication end device (300) and adapted for communication between the telecommunication end device (300) and the data carrier (400);
- onward transferring (S10d) the transferred (S10c) at least part (110) of the updating data (110, 111, 418) from the programming interface (330) to a data-carrier management (420) of the data carrier (400) installed in the data carrier (400);
- so that the programming interface (320) enables a communication between the two instances security application (410) and data-carrier management (420) which are provided spatially within the data carrier (400) but mutually separated in terms of communication technology; and
- updating (10e) the data carrier (400) through the data-carrier management (420) according to the onward transferred at least part (110) of the updating data (110, 111,418).

2. The method according to claim 1, wherein
- the updating data (110, 111, 418) comprise the data-carrier application (110),
- the transferring (S10c) comprises a transferring of the data-carrier application (110),
- the onward transferring (S10d) comprises an onward transferring of the data-carrier application (110), and
- the updating of the data carrier (400) comprises an installing (10e) of the data-carrier application (110) in the data carrier (400).

3. The method according to claim 1 or 2, wherein the updating data comprise configuration data (111, 418), and wherein the updating of the data carrier (400) comprises a configuring (S10a) of the data carrier (400), in particular of the security application (410), by means of the configuration data (111, 418).

4. The method according to claim 3, wherein
- the security application (410) comprises a certificate list (412) and at least one access rights list (416),
- wherein the certificate list (412) comprises data-carrier application certificates (111) of data-carrier applications (110, 421, 422, 423) installed in the data carrier (400), and the at least one access rights list (416) states access rights (418) of end-device applications (210, 311, 312) installed in the telecommunication end device (300) to data-carrier applications (110, 421-423) installed in the data carrier (40), and wherein
- upon the configuring of the data carrier (400) the certificate list (412) and the at least one access rights list (416) are updated according to the updating data (111, 418) (S10a).

5. The method according to claim 4, wherein the configuration data (111, 418) comprise a data-carrier application certificate (111) with a public key (121) of a provider (100) of the data-carrier application (110), and wherein the configuring (S10a) of the data carrier (400), in particular of the security application (410), comprises an entering, through the security application (410), of the data-carrier application certificate (111) in the certificate list (412).

6. The method according to any of claims 1 to 5, wherein a signature (113), linked in particular with the updating data (110, 111, 418), is verified through the programming interface (330) or through the security application (410) (S8) before the data carrier (400) is updated according to the updating data (110, 111, 418) (S10a, SlOe).

7. The method according to claim 6, wherein the signature (113) is, or has been, created by means of a secret key (120) of a provider (100) of the data-carrier application (110) (S3).

8. The method according to any of claims 1 to 7, the making available of updating data (110, 111, 418) comprising the steps of:
- integrating (S2) the updating data (110, 111, 418) into an end-device application certificate (211) of an end-device application (210) to be installed in the end device (300);
- loading the end-device application certificate (211) and the end-device application (210) into the telecommunication end device (300);
- installing (S5) the end-device application (210) in the telecommunication end device (300);
- extracting (S9) the updating data (110, 111, 418) from the end-device application certificate (211); and
- making available the extracted updating data (110, 111, 418), in particular through the programming interface (330), to the security application (410) (S9).

9. A data carrier (400), inserted in a telecommunication end device (300), comprising data-carrier applications (421, 422, 423) installed in the data carrier (400), a security application (410) installed in the data carrier (400) and a data-carrier management (420) installed in the data carrier (400, which are adapted to execute any of the methods according to any of claims 1 to 8.

10. A telecommunication end device (300) into which a data carrier (400) according to claim 9 is inserted, comprising end-device applications (311, 312) installed in the telecommunication end device (300) and a programming interface (330) of the data carrier (400), said interface being adapted to receive and onward transfer at least a part (110) of updating data (110, 111, 418) according to a method according to any of claims 1 to 8 and optionally make them available according to claim 8.

## Revendications

1. Procédé d'actualisation (S2-S9, S10a-S10e, S11) d'un support de données (400) relativement à une application de support de données (110) exécutable dans le support de données (400), cependant que le support de données (400) est inséré dans un terminal de télécommunication (300), comprenant les étapes :
- mise à disposition, par le terminal de télécommunication (300), de données d'actualisation (110, 111, 418) à une application de sécurité (410) (S9) installée dans le support de données (400) :
- actualisation du support de données (400) conformément aux données d'actualisation (110, 111, 418), l'actualisation du support de données (400) comprenant les étapes :
- transfert (S10c) d'au moins une partie (110) des données d'actualisation (110, 111, 418), de l'application de sécurité (410) à une interface de programmation (330) installée dans le terminal de télécommunication (300) et conçue pour la communication entre le terminal de télécommunication (300) et le support de données (400) ;
- transfert subséquent (S10d), de la au moins une partie (110) des données d'actualisation (110, 111, 418) transférée (S10c), de l'interface de programmation (330) à une gestion de support de données (420) du support de données (400) installée dans le support de données (400) ;
- de telle sorte que l'interface de programmation (320) permet une communication entre les deux instances application de sécurité (410) et gestion de support de données (420), prévues spatialement à l'intérieur du support de données (400) mais existant séparément l'une de l'autre quant à leur technique de communication ; et
- actualisation (10e) du support de données (400) par la gestion de support de données (420) conformément à la au moins une partie (110) des données d'actualisation (110, 111, 418) subséquemment transférée.

2. Procédé selon la revendication 1, cependant que
- les données d'actualisation (110, 111, 418) comprennent l'application de support de données (110),
- le transfert (S10c) comprend un transfert de l'application de support de données (110),
- le transfert subséquent (S10d) comprend un transfert subséquent de l'application de support de données (110), et
- l'actualisation du support de données (400) comprend une installation (10e) de l'application de support de données (110) dans le support de données (400).

3. Procédé selon la revendication 1 ou 2, cependant que les données d'actualisation comprennent des données de configuration (111, 418), et cependant que l'actualisation du support de données (400) comprend une configuration (S10a) du support de données (400), en particulier de l'application de sécurité (410), au moyen des données de configuration (111, 418).

4. Procédé selon la revendication 3, cependant que
- l'application de sécurité (410) comprend une liste de certificats (412) et au moins une liste de droits d'accès (416),
- cependant que la liste de certificats (412) comprend des certificats d'applications de support de données (111) d'applications de support de données (110, 421, 422, 423) installées dans le support de données (400), et que la au moins une liste de droits d'accès (416) indique des droits d'accès (418) d'applications de terminal (210, 311, 312) installées dans le terminal de télécommunication (300) à des applications de support de données (110, 421-423) installées dans le support de données (40), et cependant que
- lors de la configuration du support de données (400), la liste de certificats (412) et la au moins une liste de droits d'accès (416) sont actualisées (S10a) conformément aux données d'actualisation (111, 418).

5. Procédé selon la revendication 4, cependant que les données de configuration (111, 418) comprennent un certificat d'application de support de données (111) muni d'une clé publique (121) d'un fournisseur (100) de l'application de support de données (110), et cependant que la configuration (S10a) du support de données (400), en particulier de l'application de sécurité (410), comprend un enregistrement, par l'application de sécurité (410), du certificat d'application de support de données (111) dans la liste de certificats (412).

6. Procédé selon une des revendications de 1 à 5, cependant qu'une signature (113), en particulier liée aux données d'actualisation (110, 111, 418), est vérifiée (S8) par l'interface de programmation (330) ou par l'application de sécurité (410) avant que le support de données (400) soit actualisé (SlOa, S10e) conformément aux données d'actualisation (110, 111, 418).

7. Procédé selon la revendication 6, cependant que la signature (113) est créée ou a été créée (S3) au moyen d'une clé secrète (120) d'un fournisseur (100) de l'application de support de données (110).

8. Procédé selon une des revendications de 1 à 7, la mise à disposition de données d'actualisation (110, 111, 418) comprenant les étapes :
- intégration (S2) des données d'actualisation (110, 111, 418) dans un certificat d'application de terminal (211) d'une application de terminal (210) à installer dans un terminal (300) ;
- chargement du certificat d'application de terminal (211) et de l'application de terminal (210) dans le terminal de télécommunication (300) ;
- installation (S5) de l'application de terminal (210) dans le terminal de télécommunication (300) ;
- extraction (S9) des données d'actualisation (110, 111, 418) depuis le certificat d'application de terminal (211) ; et
- mise à disposition des données d'actualisation (110, 111, 418) extraites, en particulier par l'interface de programmation (330), à l'application de sécurité (410) (S9).

9. Support de données (400), inséré dans un terminal de télécommunication (300), comprenant des applications de support de données (420, 422, 423) installées dans le support de données (400), une application de sécurité (410) installée dans le support de données (400) et une gestion de support de données (420) installée dans le support de données (400), lesquelles sont conçues pour exécuter un des procédés selon une des revendications de 1 à 8.

10. Terminal de télécommunication (300) dans lequel un support de données (400) selon la revendication 9 est inséré, comprenant des applications de terminal (311, 312) installées dans le terminal de télécommunication (300) et une interface de programmation (330) du support de données (400), laquelle est conçue pour, suivant un procédé selon une des revendications de 1 à 8, recevoir, transférer subséquemment et, en option selon la revendication 8, mettre à disposition au moins une partie (110) de données d'actualisation (110, 111, 418).
